# EUROPEAN PATENT SPECIFICATION

(11) **EP 3 114 175 B1**
(45) Date of publication and mention of the grant of the patent: **27.06.2018**
(21) Application number: 15710389.6
(22) Date of filing: 06.03.2015
(51) Int. Cl.: C09D 5/08, C08K 3/04

(54) **PRIMER COMPOSITIONS FOR APPLICATION TO SHEET MATERIALS AND METHODS OF APPLYING SAME**
PRIMERZUSAMMENSETZUNGEN ZUR ANWENDUNG AUF MATERIALIEN UND VERFAHREN ZUR ANWENDUNG DAVON
COMPOSITIONS DE COUCHE PRIMAIRE POUR APPLICATION SUR DES MATERIAUX EN FEUILLE ET LEURS PROCEDES D'APPLICATION

(30) Priority: 06.03.2014 US 201414198629
(43) Date of publication of application: 11.01.2017
(73) Proprietor: PPG Industries Ohio, Inc., Cleveland, OH 44111 (US)
(72) Inventor: SCHWENDEMAN, Irina G., Wexford, Pennsylvania 15090 (US); CONLEY, Carole A., Saxonburg, Pennsylvania 16056 (US); MILLERO, JR., Edward R., Gibsonia, Pennsylvania 15044 (US)
(74) Representative: f & e patent
(86) International application number: PCT/US2015/019097
(87) International publication number: WO 2015/134834

(56) References cited:
- US-A- 4 103 050
- US-A- 5 652 024
- US-A1- 2007 228 332
- US-A1- 2012 091 397
- US-A1- 2012 094 128
- US-A1- 2012 094 130
- US-A1- 2013 337 258

## Description

### FIELD OF THE INVENTION

The present invention relates to primer compositions for application to sheet materials, methods of primer compositions to sheet materials.

### BACKGROUND OF THE INVENTION

Sheet materials used in architectural and other applications often require corrosion resistant properties. For example, steel and other types of metal roofing sheet materials must withstand exposure to environmental conditions for extended periods of time. Galvanized steel roofing sheets have conventionally been pre-treated with chromium-containing compositions to increase corrosion resistance. Such pretreatments may be conducted on long strips of the steel, which are then coiled into rolls for subsequent use. US 4,103,050 describes heat-curable aqueous coil primer for priming metal coils. Moreover, a latex primer composition is described comprising a crosslinker, chromate and water. US 2013/0337258 A1 describes coated sheet materials in order to reduce overheating including relatively high solar reflectance and thermal emittance. The compositions described in US 2013/0337258 A1 have a chrome content of 1.34 wt. %. US 5,652,024 discloses waterborne coating compositions including zinc as corrosion resistance pigment and a crosslinking agent. US 9,005,355, US 2012/0094130 A1, US 9,371,454, US 7,972,533 disclose coating compositions that do not comprise materials being regulated or otherwise known to present a hazard/danger.

### SUMMARY OF THE INVENTION

An aspect of the invention provides a rapidly curable waterborne primer coating composition comprising water, self-crosslinking latex resin and corrosion-inhibiting particles, wherein the corrosion-inhibiting particles comprise chrome and are present in an amount of at least 3 weight percent based on the total weight of the coating composition.

Another aspect of the invention provides a coated metal sheet comprising a metal substrate and a cured primer coating covering at least a portion of the metal substrate, wherein the cured primer coating comprises the inventive coating composition and is cured for less than 10 second at a temperature of less than 177 °C (350 °F).

A further aspect of the invention provides a method of coating a sheet metal substrate comprising applying the inventive primer coating composition onto the sheet material, and curing the primer coating composition at a temperature of less than 177 °C (350 °F) for a time of less than 10 seconds.

### BRIEF DESCRIPTION OF THE DRAWINGS

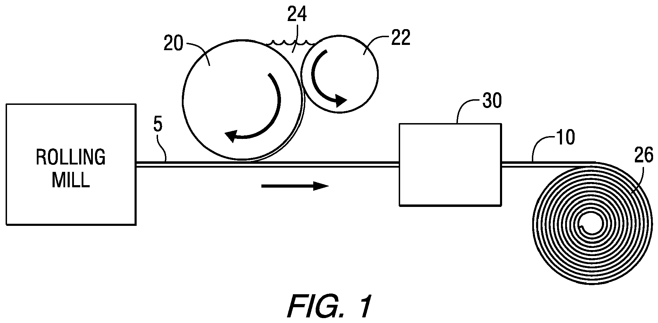

Fig. 1 is a partially schematic side view illustrating a method of applying a primer coating onto a metal sheet in rolling mill, including the use of a roll coater for applying a primer coating composition to the sheets and the use of in accordance with an embodiment of the present invention.

### DETAILED DESCRIPTION OF EMBODIMENTS OF THE INVENTION

Fig. 1 schematically illustrates a roll coating method for applying primer coating compositions onto sheet materials in accordance with an embodiment of the present invention. In the embodiment shown, the coating operation may be conducted in a conventional rolling mill. Metal sheet material, such as galvanized steel, aluminum, or the like, is provided in a long strip 5 that passes under oppositely-rotating coating rollers 20 and 22, which are fed with a supply of a primer coating composition 24. The substrate sheet may be of any desired thickness, such as from 0.5 to 3 mm. For example, the thickness of galvanized steel roof sheeting materials may range from 0.5 to 2 mm in certain embodiments. The uncoated strip 5 passes under the coating rollers 20 and 22, where a layer of the primer coating composition 24 is deposited on the upper surface of the sheet material. After the primer coating composition 24 is deposited on the strip 5, the coated strip 10 passes through an oven 30 or any other known type of heating device such as an IR heat source to rapidly cure the primer coating composition. The coated sheet material 10 may be formed into a coil 26 for storage and transportation for use in various applications.

During the roll coating process, the primer coating composition is typically applied to the sheet material 5 with a wet film thickness of at least 1 micron, typically at least 1 or 5 microns. In certain embodiments, the wet film thickness of the coating material is from 5 to 15 or 20 microns. In certain embodiments, the deposition rate of the coating composition may be at least 61 m/min (200 ft/min), typically at least 91 m/min (300 ft/min) or 107 m/min (350 ft/min).

After application, the primer coating compositions typically dry and cure quickly with minimal VOC emissions. As used herein, the terms "rapidly cure" and "rapidly curable" mean that the primer coating compositions fully cure within a reduced amount of time when subjected to elevated temperatures as compared to conventional primer compositions that are typically applied to metal substrates in the field. Curing times are typically in less than 20 seconds, for example, less than 10 or 5 seconds. Typical curing temperatures are below 177 °C (350 °F), for example, below 149 °C (300°F) or 121 °C (250°F). In certain embodiments, curing times may be less than 3 or 2 seconds at temperatures of 104 °C (220 °F) or 93 °C (200 °F), or less.

The primer coating may have a dry film thickness typically greater than 1 micron, for example, greater than 2 or 3 microns. In certain embodiments, the dry film thickness of the primer coating may be from 3 to 10 or 20 microns.

The primer coating compositions of the present invention is waterborne. In certain embodiments, water may comprise from 20 to 80 weight percent of the primer coating compositions, for example, from 50 to 65 weight percent. In certain embodiments, the primer coating compositions comprise less than 10 weight percent organic solvents, for example, less than 7 or 4 weight percent, based on the total weight of the composition. The resin solids content of the primer coating compositions may be relatively high, for example, greater than 35 or 40 weight percent, based on the total weight of the composition.

The primer coating compositions may have little or no volatile organic content (VOC). For example, the primer coating compositions may comprise less than 1.5 weight percent VOCs, for example, less than 1 or 0.5 weight percent VOCs, based on the total weight of the composition. In certain embodiments, the primer coating compositions are substantially free of VOCs.

The primer coating composition comprises a latex resin. The latex resin is self-crosslinking. The latex resin typically comprises from 20 to 60 weight percent of the primer coating composition, for example, from about 30 to about 50 weight percent. In certain embodiments, suitable monomers used for preparing the latex resins may include vinyl aromatic monomers such as styrene, cycloaliphatic monomers such as cyclohexyl methacrylate, and long-chain aliphatic monomers such as 2-ethylhexyl acrylate, MMA and/or 2-ethylhexyl methacrylate. Other types of monomers include cyclohexene, 2-ethyl-1-hexene, cyclohexanol, alpha-methylstyrene, 2-ethylhexanol, 2-ethylhexyl acetate, methyl-4-phenyl butyrate, methyl myristate and/or methyl palmitate.

In certain embodiments, the monomers used in the latex resin comprise a vinyl aromatic compound, such as a vinyl aromatic monomer, which, in certain embodiments, comprises a compound that has a calculated Tg of least 100°C. Specific examples of vinyl aromatic compounds are styrene (which has a calculated Tg of 100°C), α-methylstyrene (which has a calculated Tg of 168°C), vinyltoluene, p-methylstyrene, ethylvinylbenzene, vinylnaphthalene, vinylxylenes, α-methylstyrene dimer (meth)acrylate, penta fluoro styrene. In certain embodiments, styrene or another vinyl aromatic monomer may comprise the most predominant monomer of the resin on a weight percent basis.

In certain embodiments, the monomers of the latex resin include cycloaliphatic (meth)acrylate monomers, such as trimethylcyclohexyl acrylate, t-butyl cyclohexyl acrylate, dicyclopentadiene (meth)acrylate, trimethylcyclohexyl methacrylate (calculated Tg of 98°C), cyclohexyl methacrylate (calculated Tg of 83°C), isobornyl methacrylate (calculated Tg of 110°C), 2-ethylhexyl methacrylate, tetrahydrofurfuryl methacrylate, 3,3,5-trimethylcyclohexyl methacrylate (calculated Tg of 125°C), and/or 4-t-butylcyclohexyl methacylate.

In certain embodiments, the monomers of the latex resin include an alkyl(meth)acrylate, which, in certain embodiments, comprises a compound that has a calculated Tg of least 100°C. Specific examples of alkyl(meth)acrylates are C₁-C²⁴ alkyl(meth)acrylates, such as methyl(meth)acrylate (which has a calculated Tg of 105°C), propyl(meth)acrylate, butyl(meth)acrylate, isobutyl(meth)acrylate, hexyl(meth)acrylate, 2-ethylhexyl(meth)acrylate, octyl(meth)acrylate, decyl(meth)acrylate, dodecyl(meth)acrylate, pentadecyl(meth)acrylate, hexadecyl(meth)acrylate, octadecyl(meth)acrylate, and nonadecyl(meth)acrylate, and mixtures thereof. Other monomers include, for example, nitriles, such as acrylonitrile and/or methacrylonitrile.

Some non-limiting examples of latex resins that may be used in the primer coating compositions of the present invention are commercially available from Nuplex, Lubrizol, Rohm and Haas, Alberdingk Boley Company, Omnova and DSM Neoresins, such as Joncryl 1982, Caroboset CR-781, Alberdingk AC 2403, Alberdingk 2360, Neocryl XK-98.

The latex resin may have an average particle size of from 50 nm to 300 nm, for example from 60 nm to 100 or 150 nm; a glass transition temperature (T_{G}) of from -20 to 100°C, typically from zero to 20 or 50°C; and an acid number of from 0 to 20, typically from 2 to 10.

The primer coating compositions also include at least one corrosion-inhibiting material including chrome-containing particles. As used herein, the term "corrosion-inhibiting" particles means particles which, when incorporated in the primer coating compositions of the present invention, provide at least 1,000 hours of salt spray corrosion resistance with no visible corrosion spots on the surface as measured by the ASTM B117 standard test. In certain embodiments, the corrosion-inhibiting particles may be provided in the form of a pigment or tint having a typical average particle size of from 0.1 to 5 microns, for example, from 0.2 to 3 microns or from 0.5 to 1.5 microns. The corrosion-inhibiting particles are typically present in an amount of from 1 to 30 weight percent based on the total weight of the primer coating composition, for example, from 2 or 3 to 25 weight percent. In certain embodiments, the corrosion-inhibiting particles comprise at least 5 or 8 weight percent, or at least 10 or 12 weight percent of the primer coating composition.

In certain embodiments, silica may be added to the primer coating compositions in amounts of from 15 to 30 weight percent, for example, from 20 to 25 weight percent. Some examples of silica include Lo-Vel 275 silica from PPG Industries and Aerosil 200 silica from Air Products.

Chromate-containing materials are added to the primer coating compositions. Example of chrome-containing corrosion-inhibiting particles include chromates such as strontium chromate. The chrome-containing corrosion-inhibiting particles comprise at least 3 weight percent, for example, from 5 to 20 weight percent, or from 8 to 18 weight percent, or from 10 to 15 weight percent, based on the total weight of the primer coating composition.

In addition to the latex resin and corrosion-inhibiting particles, the primer coating compositions may further comprise at least one coalescing agent in an amount of up to 10 weight percent, for example, in an amount of from 2 to 3 weight percent, based on the total weight of the primer coating composition. Examples of suitable coalescing agents include butyl carbitol commercially available from Dow Chemical Company, Dowanol DPM, Dowanol DPnB, Dowanol PPh, butyl cellosolve or Dowanol DPnP. In accordance with embodiments of the present invention, the coalescing agents form a thin film around the latex resin particles, which helps them coalesce. Improved coalescence of the latex resin particles may result in very fine particle sizes and a uniform microstructure, which may provide improved corrosion protection in comparison with other types of coatings having larger resin particle sizes. For example, in accordance with certain embodiments of the present invention, the average resin particle size may be less than 150 nanometers, for example, less than 100 or 80 nanometers.

In certain embodiments, wax may be added to the primer coating compositions in amounts up to 10 weight percent, for example, from 0.5 to 3 weight percent, based on the total weight of the coating composition. Suitable types of wax include Ceraflour 913, Worleeadd 352, Aquamat 272, Aquamat 270, Aquacer 539, and combinations thereof. For example, wax sold under the designation Aquamat 272 by BYK Chemie may be used. The type and amount of wax may be controlled in order to improve scratch resistance of the coated sheet materials. For example, when the coated sheets are formed into coils, the use of wax additives may reduce or prevent scratching during the coiling an uncoiling processes, as well as during subsequent top coating and/or installation and use of the coated sheet materials. In certain embodiments, the amount of wax added to the primer coating composition is limited in order to avoid unwanted slippage when the coated sheets are coiled, e.g., to prevent unwanted "telescoping" of the coils due to low friction between the adjacent coil layers.

Various other additives may optionally be added to the primer coating compositions in accordance with certain embodiments of the invention. For example, suitable additives include thickeners, defoamers, surfactants, rust inhibitors, pH control agents, and tints such as titanium dioxide typically used in primers.

Suitable thickeners include Acrysol ASE-60, Aquatix 8421, DSX-1550, and Laponite RD. When used, such thickening agents may be present in amounts up to 7 weight percent, for example, from 0.5 to 4 weight percent, based on the total weight of the primer coating composition.

Suitable defoamers include BYK-011, BYK-20, BYK-32, BYK 34 and Drewplus L-419 available from Ashland in amounts up to 2 weight percent, for example, from 0.1 to 0.5 weight percent, based on the total weight of the primer coating composition.

Suitable surfactants include Zonyl FSP available from DuPont, Surfynol 104E available from Air Products, BYK 346, and BYK348 in amounts up to 2 weight percent, for example, from 0.1 to 0.5 weight percent, based on the total weight of the primer coating composition.

Suitable rust inhibitors include Halox 550, Halox Flash X-150, 330, Halox SZP-391, ammonium benzoate, and sodium nitrite in typical amounts up to 1 weight percent, for example, from 0.4 to 0.6 weight percent, based on the total weight of the primer coating composition.

In certain embodiments, the primer coating compositions are substantially free of certain metal salts such as metal phosphates, phosphocarbonates and phosphosilicates. For example, the compositions may be substantially free of zinc phosphate, calcium phosphate, calcium phosphosilicate and/or calcium-enriched silica.

Suitable pH control agents include any water soluble amine such as dimethylethanol amine (DMEA) available from Avecia in typical amounts up to 1 weight percent, for example, from 0.01 to 0.2 weight percent, based on the total weight of the primer coating composition.

In certain embodiments, at least one colored pigment or tint may be added to the primer coating compositions. Colored pigments and tints are different from reflective interference pigments and include standard inorganic and organic pigments, such as those found in conventional paints and primers. For example, various colored pigments are listed in the Dry Color Manufacturers Association

(DCMA) classifications. Such colored pigments and tints typically comprise particles having substantially equiaxed morphologies, e.g., aspect ratios of about 1:1, in comparison with plate-like and sheet-like reflective interference pigments having relatively high aspect ratios. One suitable type of colored pigment includes TiO₂ in an amount up to 35 weight percent, for example, from 1 to 25 weight percent, based on the total weight of the primer coating composition. Aquext white tint commercially available from PPG Industries and Corrosperse 176E chrome tint commercially available from Wayne Pigments are examples of suitable tints.

In certain embodiments, conductive particles such as graphenic carbon particles may be added to the primer coating compositions in amounts of up to 5 weight percent or more, for example, from 1 to 2 weight percent, based on the total weight of the primer coating composition. Such graphenic carbon particles may provide improved thermal emissivity properties. The graphenic carbon particles may be obtained from commercial sources, or may be made in accordance with the methods and apparatus described in U.S. Application Serial Nos. 13/249,315 and 13/309,894.

The following examples illustrate various aspects of the present invention, but are not intended to limit the scope of the invention.

### EXAMPLES

Primer coating compositions comprising chrome or non-chrome corrosion-inhibiting particles were prepared as described in Table 1 below. Sample No. 1 contained a chrome tint, while Sample No. 2 was chrome-free.

**Table 1**

| Primer Coating Compositions | | |
|---|---|---|
| Components | Sample No. 1 (Chrome-based Primer) | Sample No. 2 (Non-Chrome-based Primer) |
| Acrylic Latex Resin | 179.07 | 155.65 |
| Deionized Water | 53.27 | 80.77 |
| Defoamer | 0.54 | 0.47 |
| Surfynol Surfactant | 1.09 | 0.94 |
| Surfactant | 1.15 | 1.0 |
| Chrome Tint | 43.92 | --- |
| Silica | --- | 86.64 |
| White Tint | 57.80 | 34.66 |
| Rust Inhibitor | 2.67 | 2.32 |
| Thickener | 4.48 | 2.88 |
| Deionized Water | 4.48 | 2.88 |
| pH Control Agent | 0.90 | 2.07 |
| Deionized Water | 0.90 | 2.07 |
| Wax | 11.45 | 9.95 |
| Total Weight in Grams | 361.72 | 382.32 |

The components listed in Table 1 were added together in the order described under gentle stirring. The primer coating compositions were allowed to equilibrate overnight before panel preparation. Viscosity and pH were checked the next day. The primer coating compositions were applied to three different types of substrates using a wire drawdown bar. The three types of substrates were hot-dipped galvanized steel, aluminum, and steel and coated with zinc and aluminum commercially available under the designation Galvalume. The coated panels were placed in a conveyor oven set at a temperature of 260°C and a line speed sufficient to obtain a peak metal temperature of 88 °C (190 °F) in two seconds dwell time. Some of the primer-coated panels were subsequently coated with three different types of top coats: high-bake waterborne topcoat commercially available from PPG under the designation Environ; a solvent-borne polyester-based topcoat commercially available from PPG under the designation Truform; and water-borne topcoat commercially available from PPG under the designation Environ MCL. Control panels comprising conventional chrome-containing and non-chrome containing primers were also made by applying either a chrome urethane primer from PPG, or a non-chrome urethane primer from PPG. The conventional urethane primers were applied by similar methods as described above, except longer cure times of at least 30 seconds at a higher peak metal temperature of 232 °C (450°F) were required in order to fully cure the urethane primers. The coated panels were tested, with the results shown in the tables below.

**Table 2**

| Primer Only | | | | |
|---|---|---|---|---|
| Primer Description | Sample No. 1 Acrylic Latex Water Base Chrome | Sample No. 2 Acrylic Latex Water Base Chrome Free | Urethane Chrome Control | Urethane Chrome-Free Control |
| % Volume Solids | 34.88 | 33.31 | 44.54 | 45.29 |
| PMT (°C) | 88 (190 °F) | 88 (190 °F) | 232 (450 °F) | 232 (450 °F) |
| Dwell (sec.) | 2 | 2 | 30 | 30 |

| Substrate | USS Bare Galvalume | USS Bare Galvalume | USS Bare Galvalume | USS Bare Galvalume |
|---|---|---|---|---|
| DFT (mils) | 0.20/0.30 | 0.20/0.30 | 0.20/0.30 | 0.20/0.30 |
| Gloss 60° | 11.8 | 3.4 | 3.5 | 3.1 |
| T-Bend: NP/NC | 2/5+ | 2/5+ | 0/5+ | 1/5 |
| Rev Impact-34 kg (75 lbs) | slpo/ncr | np/ncr | np/ncr | slpo/vslcr |
| X-Hatch Adhesion | 5b | 5b | 5b | 5b |
| MEK Mar | 2 | 2 | 100 | 3 |
| Pencil Hardness | 2h | h | 2h | h |

**Table 3**

| Primer and Water-Based High Bake System Environ Topcoat | | | | |
|---|---|---|---|---|
| Primer | Sample No. 1 Acrylic Latex Water Base Chrome | Sample No. 2 Acrylic Latex Water Base Chrome Free | Urethane Chrome Control | Urethane Chrome-Free Control |
| Topcoat | Environ | Environ | Environ | Environ |
| % Volume Solids | 34.88 | 33.31 | 44.54 | 45.29 |
| PMT (°C) | 88 (190 °F) | 88 (190 °F) | 232 (450 °F) | 232 (450 °F) |
| Dwell (sec.) | 2 | 2 | 30 | 30 |

| Substrate | USS Bare Galvalume | USS Bare Galvalume | USS Bare Galvalume | USS Bare Galvalume |
|---|---|---|---|---|
| DFT Primer(mils) | 0.2-0.3 | 0.2-0.3 | 0.2-0.3 | 0.2-0.3 |
| DFT Topcoat (mils) | 0.7-0.8 | 0.7-0.8 | 0.7-0.8 | 0.7-0.8 |
| Gloss 60° | 28.9 | 23.1 | 35.4 | 34.5 |
| T-Bend: NP/NC | 2/5 | 5+/5 | 0/3 | 1/4 |
| Rev Impact-34 kg (75 lbs) | modpo/ncr | modpo/ncr | np/ncr | np/ncr |
| X-Hatch Adhesion | 1b | 2b | 5b | 5b |
| MEK Mar | 100 | 100 | 100 | 100 |
| Pencil Hardness | f | F | h | h |

**Table 4**

| Primer and Truform Solvent-Borne Polyester Topcoat | | | | |
|---|---|---|---|---|
| Primer Resin Code | Sample No. 1 Acrylic Latex Water Base Chrome | Sample No. 2 Acrylic Latex Water Base Chrome Free | Urethane Chrome Control | Urethane Chrome-Free Control |
| Topcoat | Polyester | Polyester | Polyester | Polyester |
| % Volume Solids | 34.88 | 33.31 | 44.54 | 45.29 |
| #4 Zahn-25-30 sec. | | | | |
| Bar | 8 | 8 | 8 | 8 |
| PMT (°C) | 88 (190 °F (260)) | 88 (190 °F (260)) | 232 (450 °F (320)) | 232 (450 °F (320)) |
| Dwell (sec.) | 2 (74) | 2 (74) | 30 (16.5) | 30 (16.5) |
| Fans | 5/5 | 5/5 | 5/5 | 5/5 |

| Substrate | USS Bare Galvalume | USS Bare Galvalume | USS Bare Galvalume | USS Bare Galvalume |
|---|---|---|---|---|
| DFT Primer(mils) | 0.2-0.3 | 0.2-0.3 | 0.2-0.3 | 0.2-0.3 |
| DFT Topcoat (mils) | 0.7-0.8 | 0.7-0.8 | 0.7-0.8 | 0.7-0.8 |
| Gloss 60° | 17.3 | 17 | 11.3 | 13.1 |
| T-Bend: NP/NC | 4/5+ | 5/5+ | 0/5 | 2/5+ |
| Rev Impact-34 kg (75 lbs) | slpo/slcr | np/slcr | np/ncr | np/ncr |
| X-Hatch Adhesion | 5b | 5b | 5b | 5b |
| MEK Mar | 100 | 100 | 100 | 100 |
| Pencil Hardness | h | h | 2h | 2h |

**Table 5**

| Primer and Low-Bake Waterborne Solar White Topcoat | | | | |
|---|---|---|---|---|
| Primer Resin Code | Sample No. 1 Acrylic Latex Water Base Chrome | Sample No. 2 Acrylic Latex Water Base Chrome Free | Urethane Chrome Control | Urethane Chrome-Free Control |
| Topcoat | SolarWhite | SolarWhite | SolarWhite | SolarWhite |
| % Volume Solids | 34.88 | 33.31 | 44.54 | 45.29 |
| PMT (°C) | 88 (190 °F) | 88 (190 °F) | 232 (450 °F) | 232 (450 °F) |
| Dwell (sec.) | 2 | 2 | 30 | 30 |

| Substrate | USS Bare Galvalume | USS Bare Galvalume | USS Bare Galvalume | USS Bare Galvalume |
|---|---|---|---|---|
| DFT Primer(mils) | 0.2-0.3 | 0.2-0.3 | 0.2-0.3 | 0.2-0.3 |
| DFT Topcoat (mils) | 0.7-0.8 | 0.7-0.8 | 0.7-0.8 | 0.7-0.8 |
| Gloss 60° | 39.8 | 36.3 | 38 | 39.2 |
| T-Bend: NP/NC | 0/5+ | 4/5+ | 0/5+ | 0/5+ |
| Rev Impact-34 kg (75 lbs) | slpo/sevcr | sevpo/sevcr | modpo/slcr | np/modcr |
| X-Hatch Adhesion | 5b | 5b | 5b | 5b |
| MEK Mar | 13 | 6 | 6 | 5 |
| Pencil Hardness | 2b | 2b | 2b | 2b |

In the foregoing tables, the T-Bend test was conducted in accordance with the standard ASTM D4145 test; the Rev Impact test was conducted in accordance with ASTM D2794, the X-Hatch Adhesion test was conducted in accordance with ASTM D3359, and the MEK Mar test was conducted in accordance with ASTM D5402. The Pencil Hardness test was conducted in accordance with ASTM D3363, in which a pencil is held firmly against the primer coating at a 45 degree angle and pushed away from the operator in a 0,635 cm (0.25 inch) stroke. Sufficient pressure is exerted downward and forward either to cut or scratch the film. The process is repeated down the hardness scale until a pencil is found that will not cut through the film to the substrate. The scale of hardness is: 6B (very soft) up to a 6H (very hard).

**Table 6**

| Corrosion Test Results | | | | |
|---|---|---|---|---|
| Primer | Sample No. 1 Acrylic Latex Water Base Chrome | Sample No. 2 Acrylic Latex Water Base Chrome Free | Urethane Chrome Control | Urethane Chrome-Free Control |
| Topcoat | Environ | Environ | Environ | Environ |
| ASTM B117 Salt Spray (1216 Hours) | | | | |
| Face | ok | f6 | ok | ok |
| Scribe | no scribe | 4mm | 1mm | 1mm |
| Edge | 8mm | 12mm | 2mm | 11mm |
| Humidity (ASTM G60-95) | | | | |
| Face | ok | m8 | ok | ok |
| Scribe | no scribe | 0.5mm | ok | 0.5mm |
| Edge | ok | 2mm | ok | 0.5mm |
| QCT (ASTM D4585 (1216 Hours)) | | | | |
| Face | ok | d8 | f8 | f8 |

**Table 7**

| Primer | Sample No. 1 Acrylic Latex Water Base Chrome | Sample No. 2 Acrylic Latex Water Base Chrome Free | Urethane Chrome Control | Urethane Chrome-Free Control |
|---|---|---|---|---|
| Topcoat | Polyester | Polyester | Polyester | Polyester |
| ASTM B117 Salt Spray 1216 Hours | | | | |
| Face | f8 | f8 | ok | f8 |
| Scribe | 0.5mm | 0.5mm | 1mm | 2mm |
| Edge | 3mm | 10mm | 7mm | 10mm |
| Humidity (ASTM G60-95) | | | | |
| Face | ok | d8 | ok | ok |
| Scribe | ok | ok | ok | ok |
| Edge | ok | ok | ok | ok |
| QCT (ASTM D4585 (1216 Hours)) | | | | |
| Face | f4 | d8 | ok | ok |

**Table 8**

| Primer | Sample No. 1 Acrylic Latex Water Base Chrome | Sample No. 2 Acrylic Latex Water Base Chrome Free | Urethane Chrome Control | Urethane Chrome-Free Control |
|---|---|---|---|---|
| Topcoat | SolarWhite | SolarWhite | SolarWhite | SolarWhite |
| ASTM B117 Salt Spray 1216 Hours | | | | |
| Face | f8 | ok | ok | ok |
| Scribe | 0.5mm | 0.5mm | 2mm | ok |
| Edge | 10mm | 10mm | 2mm | 2mm |
| Humidity (ASTM G60-95) | | | | |
| Face | ok | md8 | d4 | d4 |
| Scribe | ok | ok | ok | ok |
| Edge | ok | ok | ok | ok |
| QCT (ASTM D4585 (1216 Hours)) | | | | |
| Face | ok | m6 | d4 | md4 |

In accordance with the ASTM B117 Salt Spray test listed in the foregoing tables, panels are placed with taped cut edges in a 35 °C (95 °F)/5% NaCl solution cabinet for 1216 hours. The panels are then removed from the cabinet and visually evaluated for any red or white rust, black spots and blister defects on the faces of the panels.

## Claims

1. A rapidly curable waterborne primer coating composition comprising:
water;
self-crosslinking latex resin; and
corrosion-inhibiting particles, wherein the corrosion-inhibiting particles comprise chrome and are present in an amount of at least 3 weight percent based on the total weight of the coating composition.

2. The rapidly curable waterborne primer coating composition of Claim 1, wherein the composition is capable of being cured in less than 10 seconds at a temperature of less than 177 °C (350 °F).

3. The rapidly curable waterborne primer coating composition of Claim 1, wherein the corrosion-inhibiting particles comprise strontium chromate.

4. The rapidly curable waterborne primer coating composition of Claim 1, wherein the latex resin is prepared from at least one vinyl aromatic monomer.

5. The rapidly curable waterborne primer coating composition of Claim 1, wherein the primer coating composition has a volatile organic content of less than 1.5 weight percent based on the total weight of the composition.

6. The rapidly curable waterborne primer coating composition of Claim 1, further comprising a coalescing agent, wax, viscosity enhancing agent, thickening agent, colored pigment and/or colored tint.

7. A coated metal sheet comprising:
a metal substrate; and
a cured primer coating covering at least a portion of the metal substrate, wherein the cured primer coating comprises the coating composition of claims 1 or 2, and is cured for less than 10 seconds at a temperature of less than 177 °C (350 °F).

8. The coated metal sheet of Claim 7, wherein the cured primer coating has a dry film thickness of at least 1 micron.

9. The coated metal sheet of Claim 7, wherein the metal is in the form of a coil.

10. A method of coating a sheet metal substrate comprising:
applying the primer coating composition of claim 1 onto the sheet material; and
curing the primer coating composition at a temperature of less than 177 °C (350 °F) for a time of less than 10 seconds.

11. The method of Claim 10, wherein the primer coating composition is applied at a wet film thickness of at least 1 micron.

12. The method of Claim 10, wherein the primer coating composition has a volatile organic content of less than 1.5 weight percent.

13. The method of Claim 10, wherein the primer coating composition is applied by roll coating preferably at a rate of at least 61 m/min (200 ft/min).

14. The method of Claim 10, wherein the primer is cured by passing the sheet material and applied primer coating composition through an oven at a temperature of less than 121 °C (250 °F) for a time of less than 5 seconds.

15. The method of Claim 10, further comprising applying a topcoat over at least a portion of the primer coating or further comprising forming the coated metal sheet into a coil.

## Patentansprüche

1. Schnell härtbare wasserbasierte Grundierbeschichtungszusammensetzung enthaltend:
Wasser,
ein selbstvernetzendes Latexharz und
korrosionsinhibierende Teilchen, wobei die korrosionsinhibierenden Teilchen Chrom enthalten und in einer Menge von mindestens 3 Gew.-%, bezogen auf das Gesamtgewicht der Beschichtungszusammensetzung, vorhanden sind.

2. Schnell härtbare wasserbasierte Grundierbeschichtungszusammensetzung nach Anspruch 1, wobei die Zusammensetzung in der Lage ist, in weniger als 10 Sekunden bei einer Temperatur von weniger als 177°C (350°F) zu härten.

3. Schnell härtbare wasserbasierte Grundierbeschichtungszusammensetzung nach Anspruch 1, wobei die korrosionsinhibierenden Teilchen Strontiumchromat enthalten.

4. Schnell härtbare wasserbasierte Grundierbeschichtungszusammensetzung nach Anspruch 1, wobei das Latexharz aus wenigstens einem aromatischen Vinylmonomer hergestellt ist.

5. Schnell härtbare wasserbasierte Grundierbeschichtungszusammensetzung nach Anspruch 1, wobei die Grundierbeschichtungszusammensetzung einen Anteil an flüchtigen organischen Stoffen von weniger als 1,5 Gew.-%, bezogen auf das Gesamtgewicht der Zusammensetzung, aufweist.

6. Schnell härtbare wasserbasierte Grundierbeschichtungszusammensetzung nach Anspruch 1, die zusätzlich ein Koaleszierungsmittel, Wachs, viskositätssteigerndes Mittel, Verdickungsmittel, gefärbtes Pigment und/oder einen Farbton enthält.

7. Beschichtetes Metallblech enthaltend:
ein Metallsubstrat und
eine gehärtete Grundierbeschichtung, die wenigstens einen Teil des Metallsubstrats bedeckt, wobei die Grundierbeschichtung die Beschichtungszusammensetzung nach Anspruch 1 oder 2 enthält und weniger als 10 Sekunden bei einer Temperatur von weniger als 177°C (350°F) gehärtet worden ist.

8. Beschichtetes Metallblech nach Anspruch 7, wobei die gehärtete Grundierbeschichtung eine Trockenfilmdicke von wenigstens 1 µm aufweist.

9. Beschichtetes Metallblech nach Anspruch 7, wobei das Metall in Form eines Coils vorliegt.

10. Verfahren zur Beschichtung eines Blechmetallsubstrats, umfassend:
Aufbringen der Grundierbeschichtungszusammensetzung nach Anspruch 1 auf das Blechmaterial und
Härten der Grundierbeschichtungszusammensetzung bei einer Temperatur von weniger als 177°C (350°F) für einen Zeitraum von weniger als 10 Sekunden.

11. Verfahren nach Anspruch 10, wobei die Grundierbeschichtungszusammensetzung in einer Nassfilmdicke von wenigstens 1 µm aufgebracht wird.

12. Verfahren nach Anspruch 10, wobei die Grundierbeschichtungszusammensetzung einen Gehalt an flüchtigen organischen Stoffen von weniger als 1,5 Gew.-% aufweist.

13. Verfahren nach Anspruch 10, wobei die Grundierbeschichtungszusammensetzung durch Rollbeschichtung vorzugsweise bei einer Geschwindigkeit von mindestens 61 m/min (200 Fuß/min) aufgebracht wird.

14. Verfahren nach Anspruch 10, wobei die Grundierung durch Hindurchführen des Blechmaterials und der aufgebrachten Grundierbeschichtungszusammensetzung durch einen Ofen bei einer Temperatur von weniger als 121 °C (250°F) für einen Zeitraum von weniger als 5 Sekunden gehärtet wird.

15. Verfahren nach Anspruch 10, das weiterhin das Aufbringen eines Decklacks auf wenigstens einem Teil der Grundierbeschichtung oder zusätzlich das Formen des beschichteten Metallblechs in einen Coil umfasst.

## Revendications

1. Composition aqueuse de revêtement primaire qu'on peut faire durcir rapidement, comprenant :
- de l'eau,
- une résine latex auto-réticulante,
- et des particules inhibant la corrosion, lesquelles particules inhibant la corrosion comprennent du chrome et se trouvent présentes en une proportion d'au moins 3 %, en poids rapporté au poids total de la composition de revêtement.

2. Composition aqueuse de revêtement primaire qu'on peut faire durcir rapidement, conforme à la revendication 1, laquelle composition est capable de durcir en moins de 10 secondes à une température inférieure à 177 °C (350 °F).

3. Composition aqueuse de revêtement primaire qu'on peut faire durcir rapidement, conforme à la revendication 1, dans laquelle les particules inhibant la corrosion comprennent du chromate de strontium.

4. Composition aqueuse de revêtement primaire qu'on peut faire durcir rapidement, conforme à la revendication 1, dans laquelle la résine latex est préparée à partir d'au moins un monomère vinyl-aromatique.

5. Composition aqueuse de revêtement primaire qu'on peut faire durcir rapidement, conforme à la revendication 1, laquelle composition de revêtement primaire présente une teneur en composés organiques volatils inférieure à 1,5 %, en poids rapporté au poids total de la composition.

6. Composition aqueuse de revêtement primaire qu'on peut faire durcir rapidement, conforme à la revendication 1, comprenant en outre un agent de coalescence, une cire, un agent augmentant la viscosité, un agent épaississant, un pigment coloré et/ou une encre colorée.

7. Tôle métallique revêtue, comprenant :
- un substrat métallique,
- et un revêtement primaire durci couvrant au moins une partie du substrat métallique, lequel revêtement primaire durci comprend une composition de revêtement conforme à la revendication 1 ou 2, et a été durci en moins de 10 secondes à une température inférieure à 177 °C (350 °F).

8. Tôle métallique revêtue, conforme à la revendication 7, dans laquelle le revêtement primaire durci présente, à l'état de film sec, une épaisseur d'au moins 1 micromètre.

9. Tôle métallique revêtue, conforme à la revendication 7, laquelle tôle métallique se présente sous forme de bobine.

10. Procédé de revêtement d'un substrat en tôle métallique, comprenant les opérations suivantes :
- appliquer sur le matériau de tôle une composition de revêtement primaire conforme à la revendication 1,
- et faire durcir cette composition de revêtement primaire à une température inférieure à 177 °C (350 °F), durant moins de 10 secondes.

11. Procédé conforme à la revendication 10, dans lequel la composition de revêtement primaire est appliquée en un film humide d'au moins 1 micromètre d'épaisseur.

12. Procédé conforme à la revendication 10, dans lequel la composition de revêtement primaire présente une teneur en composés organiques volatils inférieure à 1,5 % en poids.

13. Procédé conforme à la revendication 10, dans lequel la composition de revêtement primaire est appliquée par enduction au rouleau, de préférence à une vitesse d'au moins 61 m/min (200 pieds par minute).

14. Procédé conforme à la revendication 10, dans lequel on fait durcir le primaire en faisant passer le matériau de tôle, avec la composition de revêtement primaire appliquée, dans un four porté à une température inférieure à 121 °C (250 °F), durant un laps de temps de moins de 5 secondes.

15. Procédé conforme à la revendication 10, comprenant en outre le fait d'appliquer une couche de dessus sur au moins une partie du revêtement primaire, ou comprenant en outre le fait de mettre sous forme de bobine la tôle métallique revêtue.
